# EUROPÄISCHE PATENTSCHRIFT

(11) **EP 3 536 940 B1**
(45) Veröffentlichungstag und Bekanntmachung des Hinweises auf die Patenterteilung: **22.09.2021**
(21) Anmeldenummer: 19160622.7
(22) Anmeldetag: 04.03.2019
(51) Int. Cl.: F02D 41/22, F02D 41/38, F02M 63/02

(54) **VERFAHREN ZUR DIAGNOSE EINER EINSPRITZVORRICHTUNG FÜR EINE VERBRENNUNGSKRAFTMASCHINE**
METHOD FOR DIAGNOSING AN INJECTION DEVICE FOR A COMBUSTION ENGINE
PROCÉDÉ DE DIAGNOSTIC D'UN DISPOSITIF D'INJECTION POUR UN MOTEUR À COMBUSTION INTERNE

(30) Priorität: 08.03.2018 DE 102018203542
(43) Veröffentlichungstag der Anmeldung: 11.09.2019
(73) Patentinhaber: VOLKSWAGEN AKTIENGESELLSCHAFT, 38440 Wolfsburg (DE)
(72) Erfinder: Wachtendorf, Axel, 38108 Braunschweig (DE); Gerhardt, Nico, 38524 Sassenburg (DE); Blume, Holger, 30519 Hannover (DE); Theobald, Jörg, 38165 Lehre (DE)

(56) Entgegenhaltungen:
- DE-A1- 19 908 352
- DE-A1-102004 062 613
- DE-A1-102007 052 451
- DE-A1-102008 060 260
- DE-A1-102011 102 260
- DE-A1-102012 021 428
- DE-C1- 19 727 794

## Beschreibung

Die Erfindung betrifft ein Verfahren zur Diagnose einer Einspritzvorrichtung für eine Verbrennungskraftmaschine, insbesondere eines Ottomotors oder eines Dieselmotors.

In direkteinspritzenden Verbrennungskraftmaschinen wird ein Kraftstoff in den Brennraum der Verbrennungskraftmaschine über ein elektrisch betätigtes Einspritzventil in der richtigen Menge und mit einem spezifizierten Spraybild eingespritzt. Die Ausformung dieser Einspritzventile garantiert keine vollständige Dichtheit zwischen dem mit dem Kraftstoff gefüllten Versorgungsrohr (common rail, Druckleitung, im Folgenden als Volumen bezeichnet) und dem Brennraum außerhalb der elektrisch angesteuerten Betätigung. Eine Leckage des Kraftstoffs, durch die Kraftstoff in den Brennraum außerhalb des Verbrennungsvorgangs eintritt, wirkt sich nachteilig im Hinblick auf Schadstoff-Emissionen aus. Der Kraftstoff nimmt unkontrolliert an der Verbrennung teil. Es können dabei Rußpartikel entstehen. Teilweise erfolgt die Umsetzung (Oxidation) des Kraftstoffs im Katalysator oder die Kohlenwasserstoff-Moleküle gelangen durch den Katalysator ungehindert in die Umwelt.

Wird nach längeren Abstellphasen die Verbrennungskraftmaschine erneut gestartet, drohen im Fall von größeren Leckagen Kraftstoffschläge. Eine weitere Gefahr bei zu niedrigem Kraftstoffdruck ist, dass das Druckgefälle zwischen Brennraum und Versorgungsrohr (Volumen) sich umdreht und das Einspritzventil vom hohen Druck des Gases im Brennraum aufgedrückt wird. Dadurch kann das Einspritzventil verschmutzen. In der Folge der Verschmutzung kann das Spraybild der Kraftstoffeinspritzung negativ beeinflusst werden. DE1 02007052451 A1 offenbart die Bestimmung der aktuellen Dauerleckage der Kraftstoffeinspritzvorrichtung durch Auswertung des Druckabfalls im Kraftstoffsystem bei abgeschalteter Brennkraftmaschine und damit abgeschalteter Hochdruckpumpe.

Aufgabe der vorliegenden Erfindung ist es, die mit Bezug auf den Stand der Technik angeführten Probleme zumindest teilweise zu lösen. Insbesondere soll ein Verfahren angegeben werden, durch das eine Leckage im Kraftstoff-Versorgungsrohr (Volumen) erkannt werden kann.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche.

Es wird ein Verfahren zur Diagnose einer Einspritzvorrichtung für eine (insbesondere direkteinspritzende) Verbrennungskraftmaschine vorgeschlagen. Die Einspritzvorrichtung weist ein Volumen auf mit mindestens einem Einlass, über den das Volumen (insbesondere über ein Ventil) mit einer Druckleitung (und mit einer (Hochdruck-) Pumpe) fluidtechnisch verbindbar ist, und mindestens einem Auslass, über den das Volumen (insbesondere über ein Ventil) mit mindestens einer Brennkammer der Verbrennungskraftmaschine verbindbar ist. Die Einspritzvorrichtung weist weiter einen ersten Drucksensor zur Messung eines Drucks in dem Volumen auf.

Das Verfahren weist zumindest die folgenden Schritte aufweist:
a) Feststellen eines ersten Zustands der Einspritzvorrichtung, bei dem der mindestens eine Einlass (alle Einlässe) und der mindestens eine Auslass (alle Auslässe) geschlossen sind und das Volumen ein konstantes Volumen aufweist; wobei das Volumen durch eine zur Einspritzung vorgesehene Flüssigkeit vollständig gefüllt ist;
b) Messen eines ersten Druckes zu einem ersten Zeitpunkt;
c) Messen eines zweiten Druckes zu einem späteren zweiten Zeitpunkt;
d) Auswertung einer Druckveränderung von dem ersten Druck zu dem zweiten Druck.

Das Volumen wird insbesondere über eine erste Pumpe mit der Flüssigkeit (z. B. ein Kraftstoff) gefüllt und unter Druck gesetzt. Zwischen der Pumpe und dem Volumen ist eine Druckleitung angeordnet. Zwischen der Druckleitung und dem Volumen ist insbesondere ein Ventil angeordnet, über das die Flüssigkeit dem Volumen zugeführt wird.

Das Volumen ist über mehrere Auslässe mit mehreren Brennkammern verbunden. Insbesondere weist jeder Auslass ein Ventil auf, über das die Flüssigkeit dem mindestens einen Brennraum zugeführt wird.

Insbesondere weist das Volumen ein weiteres Ventil (z. B. ein Druckbegrenzungsventil) in einer Rücklaufleitung auf, über das die Flüssigkeit aus dem Volumen in einen Tank für die Flüssigkeit oder in eine Leitung stromaufwärts der ersten Pumpe zurückgeführt werden kann.

Der erste Zustand der Einspritzvorrichtung umfasst insbesondere, dass der mindestens eine Einlass und der mindestens eine Auslass geschlossen sind und das Volumen damit ein konstantes Volumen aufweist. Die Flüssigkeit kann bei dem vorliegenden Druck also nicht aus dem Volumen austreten (außer ggf. ungewollt als Leckage).

Der erste Zustand liegt insbesondere in Phasen ohne gesteuerte Zufuhr und Abfuhr von Flüssigkeit in oder aus dem Volumen vor (z. B. bei Schubabschaltung oder Gasbetrieb der Verbrennungskraftmaschine, elektrischer Betrieb des Kraftfahrzeuges; oder in einer Nachlaufphase, in der ein Steuergerät der Verbrennungskraftmaschine noch wach ist.) In derartigen Phasen ist insbesondere die erste Pumpe (ggf. auch eine zweite Pumpe in einem Tank für die Flüssigkeit) abgeschaltet, wobei ein Abfluss von Flüssigkeit aus dem Volumen über die Rücklaufleitung ebenfalls nicht vorliegt.

Das Volumen ist durch die Flüssigkeit vollständig gefüllt. Vollständig heißt hier ein Füllgrad des Volumens von 100 %. Das vollständig gefüllte Volumen befindet sich durch den eingestellten Druck und die vorliegende Temperatur im "fluidischen" Bereich, so dass ein Ausgasen durch das Bilden eines Nassdampfes insbesondere nicht möglich ist. Eine Verdampfung der Flüssigkeit bzw. das Vorliegen von Gas innerhalb des Volumens ist also insbesondere nicht möglich.

Der Druck innerhalb des Volumens beträgt insbesondere mindestens 80 bar, bevorzugt mindestens 150 bar. Insbesondere beträgt der Druck höchstens 450 bar.

Die in Schritt d) ausgewertete Druckveränderung kann auf eine Leckage hindeuten. Insbesondere kann über einen Gradienten der Druckveränderung (also Veränderung Druck pro Zeiteinheit) auf das Ausmaß der Leckage (Volumenstrom; also Liter/Minute) geschlossen werden.

Die festgestellte Leckage kann als Eintrag in einem Steuergerät hinterlegt werden. Ggf. kann eine Störungsmeldung erzeugt oder der Eintrag durch ein Diagnosegerät ausgelesen werden. Der Hinweis auf die Leckage kann bei einer Wartung der Verbrennungskraftmaschine zur Fehlerbehebung genutzt werden.

Insbesondere umfasst das Verfahren die folgenden zusätzlichen Schritte:
i. Ermitteln einer ersten Temperatur der Flüssigkeit in dem Volumen zu dem ersten Zeitpunkt;
ii. Ermitteln einer zweiten Temperatur der Flüssigkeit in dem Volumen zu dem zweiten Zeitpunkt;
iii. Auswertung einer Druckveränderung von dem ersten Druck zu dem zweiten Druck unter Berücksichtigung der ersten Temperatur und der zweiten Temperatur.

Schritt iii. erfolgt als spezielle Ausgestaltung von Schritt d) Schritt i. erfolgt insbesondere zeitgleich mit bzw. als spezielle Ausgestaltung von Schritt b). Schritt ii. erfolgt insbesondere zeitgleich mit bzw. als spezielle Ausgestaltung von Schritt c). Ggf. werden Druck und Temperatur innerhalb eines Zeitfensters ermittelt. Der erste bzw. zweite Zeitpunkt umfasst dann z. B. einen Zeitraum von höchstens 20 Sekunden, insbesondere von höchstens 5 Sekunden.

Insbesondere wird vorgeschlagen, die physikalischen Eigenschaften des Kraftstoffs bei der Ermittlung der Leckage zu berücksichtigen. Dabei ist zu berücksichtigen, dass die Flüssigkeit (z. B. Kraftstoff) bei konstantem Volumen ihren Druck in Abhängigkeit von der vorliegenden Temperatur ändert.

Die Veränderung des Drucks der Flüssigkeit korreliert mit der Veränderung der Temperatur. Diese Korrelation kann z. B. in einem Leckage-freien bzw. dichten System (z. B. auf einem Prüfstand) für eine Referenzflüssigkeit (oder für den Typ der im Betrieb verwendeten Flüssigkeit) ermittelt und in einem Steuergerät der Verbrennungskraftmaschine (z. B. in Form einer Kennlinie) hinterlegt werden.

Die zu den betreffenden Zeitpunkten ermittelten Temperaturen können genutzt werden, um die dadurch bewirkte (zulässige) Druckveränderung bestimmen zu können. Eine weitere Abweichung von dieser (zulässigen) Druckveränderung deutet dann auf eine Leckage hin.

Insbesondere wird eine Kennlinie (für die verwendete Flüssigkeit), die die Druckveränderung in Abhängigkeit von der Temperatur der Flüssigkeit darstellt, in einer leckagefreien Einspritzvorrichtung ermittelt (z. B. auf einem Prüfstand, auf dem z. B. ideale - also vollständig abdichtende - Einspritzventile darstellbar oder zumindest nachbildbar sind). Die Kennlinie kann für Schritt iii. berücksichtigt werden.

Leckagefrei heißt hier insbesondere, dass eine Leckage in der leckagefreien Einspritzvorrichtung, z. B. in einem definierten Zeitfenster und unter definierten Umgebungsbedingungen, nicht auftritt.

Gemäß einer ersten Ausgestaltung können die erste Temperatur und die zweite Temperatur mittels eines Temperatursensors gemessen werden.

Gemäß einer alternativen Ausgestaltung können die erste Temperatur und die zweite Temperatur über ein Wärmeleitmodell bzw. ein Temperaturmodell rechnerisch ermittelt werden.

Insbesondere wird berücksichtigt, dass der Temperaturverlauf der Flüssigkeit mit dem Temperaturverlauf der Verbrennungskraftmaschine korreliert, an die das Volumen wärmetechnisch gekoppelt ist. Die Verbindung von Volumen und Verbrennungskraftmaschine stellt thermisch betrachtet eine Wärmebrücke dar. Dabei ist der zeitliche Versatz der Temperaturverläufe von Verbrennungskraftmaschine und Volumen zu berücksichtigen.

Erfindungsgemäß wird ausgehend von der Gesamtleckage über eine Auswertung einer Lambdaregelung der Verbrennungskraftmaschine eine Leckage über den mindestens einen Auslass ermittelt.

Es wird über eine Lambdaregelung der Verbrennungskraftmaschine (also die Messung des Gehalts von Luft im Abgas) festgestellt, ob die Flüssigkeit (also Kraftstoff) über den Auslass in die Brennräume gelangt ist.

Es erfolgt eine Lambdaregelung für jeden Brennraum. Damit kann bestimmt werden, über welchen Auslass eine Leckage erfolgt.

Insbesondere sind neben der Leckage über die Auslässe (also z. B. über ein Einspritzventil für Kraftstoff in den Brennraum) weitere Leckagen möglich. Eine weitere Leckage kann umfassen, dass die Flüssigkeit über den Einlass aus dem Volumen austritt und ggf. über die erste Pumpe in einen Bereich geringeren Druckes (also stromaufwärts der ersten Pumpe) zurückströmt. Diese Art der Leckage ist insbesondere nicht schädlich für die Verbrennungskraftmaschine, solange ein gewisser Volumenstrom nicht überschritten wird.

Durch die vorstehend beschriebene Ermittlung der Leckage über den Auslass (über die Lambdaregelung) können die Gesamtleckage ermittelt und die (Einzel-)Leckagen zugeordnet werden.

Weiter wird eine Verbrennungskraftmaschine nach Anspruch 6 vorgeschlagen.

Die Ausführungen zu dem vorgeschlagenen Verfahren sind auf die vorgeschlagene Verbrennungskraftmaschine übertragbar und umgekehrt Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figur näher erläutert. Es ist darauf hinzuweisen, dass die Erfindung durch das gezeigte Ausführungsbeispiel nicht beschränkt werden soll. Insbesondere ist darauf hinzuweisen, dass die Figur und insbesondere die dargestellten Größenverhältnisse nur schematisch sind.

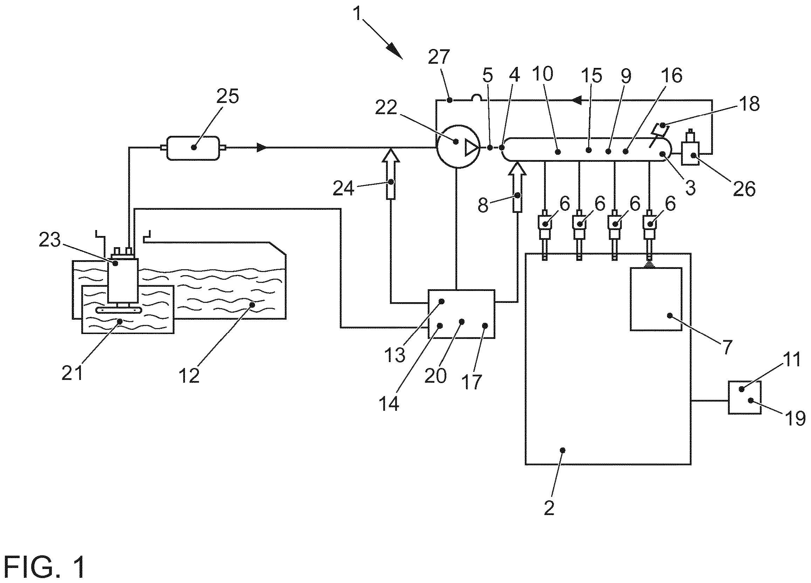

Fig. 1 zeigt eine Verbrennungskraftmaschine 2 mit einer Einspritzvorrichtung 1.

Die Verbrennungskraftmaschine 2 umfasst mehrere Brennkammern 7, wobei über die Einspritzvorrichtung 1 jeder Brennkammer 7 über den Auslass 6 (ein Einspritzventil) die Flüssigkeit 12 zuführbar ist.

Die Verbrennungskraftmaschine 2 umfasst eine Einrichtung 19 zur Lambdaregelung der Verbrennungskraftmaschine 2, wobei mit der Auswertung nach Schritt d) oder iii. des Verfahrens eine Gesamtleckage der Einspritzvorrichtung 1 ermittelbar ist. Ausgehend von der Gesamtleckage ist über eine Auswertung der Lambdaregelung der Verbrennungskraftmaschine 2 eine Leckage über den mindestens einen Auslass 6 ermittelbar.

Die Einspritzvorrichtung 1 weist ein Volumen 3 auf mit einem Einlass 4, über den das Volumen 3 mit einer Druckleitung 5 und mit einer ersten (Hochdruck-)Pumpe 22 fluidtechnisch verbindbar ist. Über eine Mehrzahl von Auslässen 6 ist das Volumen 3 mit einer Mehrzahl von Brennkammern 7 der Verbrennungskraftmaschine 2 verbindbar. Die Einspritzvorrichtung 1 weist einen ersten Drucksensor 8 zur Messung eines Drucks 9, 10 in dem Volumen 3 auf. In Schritt a) des Verfahrens wird ein erster Zustand 11 der Einspritzvorrichtung 1 festgestellt, bei dem der Einlass 4 und die Auslässe 6 geschlossen sind und das Volumen 3 ein konstantes Volumen aufweist. Das Volumen 3 ist durch eine zur Einspritzung vorgesehene Flüssigkeit 12 vollständig gefüllt. In Schritt b) wird ein erster Druck 9 zu einem ersten Zeitpunkt 13 gemessen. In Schritt c) wird ein zweiter Druck 10 zu einem späteren zweiten Zeitpunkt 14 gemessen. In Schritt d) erfolgt eine Auswertung einer Druckveränderung von dem ersten Druck 9 zu dem zweiten Druck 10, z. B. über die Steuervorrichtung 20.

In einem weiteren Schritt i. wird eine erste Temperatur 15 der Flüssigkeit 12 in dem Volumen 3 zu dem ersten Zeitpunkt 13 über einen Temperatursensor 18 ermittelt. In Schritt ii. wird eine zweite Temperatur 16 der Flüssigkeit 12 in dem Volumen 3 zu dem zweiten Zeitpunkt 14 ermittelt. In Schritt iii. erfolgt eine Auswertung einer Druckveränderung von dem ersten Druck 9 zu dem zweiten Druck 10 unter Berücksichtigung der ersten Temperatur 15 und der zweiten Temperatur 16.

Die Flüssigkeit 12 wird über eine zweite Pumpe 23 aus dem Tank 21 über einen Filter 25 hin zur ersten Pumpe 22 gefördert. In diesem Bereich (Niederdruckbereich) ist ein zweiter Drucksensor 24 angeordnet. Das Volumen 3 wird über die erste Pumpe 22 mit der Flüssigkeit 12 (z. B. ein Kraftstoff) gefüllt und unter Druck 9, 10 gesetzt. Zwischen der ersten Pumpe 22 und dem Volumen 3 ist eine Druckleitung 5 angeordnet. Zwischen der Druckleitung 5 und dem Volumen 3 ist der Einlass 4 angeordnet, über den die Flüssigkeit 12 dem Volumen 3 zugeführt wird.

Das Volumen 3 ist über ein Ventil 26 (z. B. ein Druckbegrenzungsventil) mit einer Rücklaufleitung 27 verbunden, über die die Flüssigkeit 12 aus dem Volumen 3 in einen Tank 21 für die Flüssigkeit 12 oder in eine Leitung stromaufwärts der ersten Pumpe 22 zurückgeführt werden kann (Niederdruckbereich).

Die festgestellte Leckage kann als Eintrag in der Steuervorrichtung 20 hinterlegt werden. Ggf. kann eine Störungsmeldung erzeugt werden oder der Eintrag durch ein Diagnosegerät ausgelesen werden. Der Hinweis auf die Leckage kann bei einer Wartung der Verbrennungskraftmaschine 2 zur Fehlerbehebung genutzt werden. Weiter wird vorgeschlagen, die physikalischen Eigenschaften des Kraftstoffs bei der Ermittlung der Leckage zu berücksichtigen. Dabei ist zu berücksichtigen, dass die Flüssigkeit 12 (z. B. Kraftstoff) bei konstantem Volumen ihren Druck 9, 10 in Abhängigkeit von der vorliegenden Temperatur 15, 16 ändert.

Eine Kennlinie 17 (für die verwendete Flüssigkeit 12), die die Druckveränderung in Abhängigkeit von der Temperatur 15, 16 der Flüssigkeit 12 darstellt, kann in einer leckagefreien Einspritzvorrichtung 1 ermittelt (z. B. auf einem Prüfstand) werden. Die Kennlinie 17 kann in der Steuervorrichtung 20 gespeichert und für Schritt iii. berücksichtigt werden.

Die erste Temperatur 15 und die zweite Temperatur 16 werden über einen Temperatursensor 18 gemessen.

### BEZUGSZEICHENLISTE

- 1: Einspritzvorrichtung
- 2: Verbrennungskraftmaschine
- 3: Volumen
- 4: Einlass
- 5: Druckleitung
- 6: Auslass
- 7: Brennkammer
- 8: erster Drucksensor
- 9: erster Druck
- 10: zweiter Druck
- 11: erster Zustand
- 12: Flüssigkeit
- 13: erster Zeitpunkt
- 14: zweiter Zeitpunkt
- 15: erste Temperatur
- 16: zweite Temperatur
- 17: Kennlinie
- 18: Temperatursensor
- 19: Einrichtung
- 20: Steuervorrichtung
- 21: Tank
- 22: erste Pumpe
- 23: zweite Pumpe
- 24: zweiter Drucksensor
- 25: Filter
- 26: Ventil
- 27: Rücklaufleitung

## Patentansprüche

1. Verfahren zur Diagnose einer Einspritzvorrichtung (1) für eine Verbrennungskraftmaschine (2), wobei die Einspritzvorrichtung (1) ein Volumen (3) aufweist mit mindestens einem Einlass (4), über den das Volumen (3) mit einer Druckleitung (5) fluidtechnisch verbindbar ist, und mehrere Auslässe (6), über die das Volumen (3) mit einer Mehrzahl von Brennkammern (7) der Verbrennungskraftmaschine (2) verbindbar ist; wobei die Einspritzvorrichtung (1) weiter einen ersten Drucksensor (8) zur Messung eines Drucks (9, 10) in dem Volumen (3) aufweist; wobei die Verbrennungskraftmaschine die Mehrzahl von Brennkammern (7), die Einspritzvorrichtung (1) und eine Einrichtung zur Lambdaregelung der Verbrennungskraftmaschine aufweist, wobei über die Einspritzvorrichtung (1) den Brennkammern (7) ein Kraftstoff zuführbar ist; wobei das Verfahren zumindest die folgenden Schritte aufweist:
a) Feststellen eines ersten Zustands (11) der Einspritzvorrichtung (1), bei dem der mindestens eine Einlass (4) und die Auslässe (6) geschlossen sind und das Volumen (3) ein konstantes Volumen (3) aufweist; wobei das Volumen (3) durch eine zur Einspritzung vorgesehene Flüssigkeit (12) vollständig gefüllt ist;
b) Messen eines ersten Druckes (9) zu einem ersten Zeitpunkt (13);
c) Messen eines zweiten Druckes (10) zu einem späteren zweiten Zeitpunkt (14);
d) Auswertung einer Druckveränderung von dem ersten Druck (9) zu dem zweiten Druck (10)
wobei mit der Auswertung nach Schritt d) eine Gesamtleckage der Einspritzvorrichtung (1) ermittelt wird; wobei ausgehend von der Gesamtleckage über eine Auswertung der Lambdaregelung der Verbrennungskraftmaschine (2) eine Leckage über die Auslässe (6) ermittelt wird; wobei über die Lambdaregelung, also über die Messung des Gehalts von Luft im Abgas, festgestellt wird, ob die Flüssigkeit (12) über die Auslässe (6) in die Brennkammern (7) gelangt ist; wobei die Lambdaregelung für jede Brennkammer (7) erfolgt, so dass mit dem Verfahren bestimmt wird, über welchen Auslass (6) eine Leckage erfolgt.

2. Verfahren nach Patentanspruch 1, wobei das Verfahren die folgenden zusätzlichen Schritte umfasst:
i. Ermitteln einer ersten Temperatur (15) der Flüssigkeit (12) in dem Volumen (3) zu dem ersten Zeitpunkt (13);
ii. Ermitteln einer zweiten Temperatur (16) der Flüssigkeit (12) in dem Volumen (3) zu dem zweiten Zeitpunkt (14);
iii. Auswertung einer Druckveränderung von dem ersten Druck (9) zu dem zweiten Druck (10) unter Berücksichtigung der ersten Temperatur (15) und der zweiten Temperatur (16); wobei Schritt iii. als spezielle Ausgestaltung von Schritt d) erfolgt.

3. Verfahren nach Patentanspruch 2, wobei eine Kennlinie (17), die die Druckveränderung in Abhängigkeit von der Temperatur (15, 16) der Flüssigkeit (12) darstellt, in einer leckagefreien Einspritzvorrichtung (1) ermittelt wird; wobei die Kennlinie (17) für Schritt iii. berücksichtigt wird.

4. Verfahren nach einem der vorhergehenden Patentansprüche 2 oder 3, wobei die erste Temperatur (15) und die zweite Temperatur (16) über einen Temperatursensor (18) gemessen werden.

5. Verfahren nach einem der vorhergehenden Patentansprüche 2 oder 3, wobei die erste Temperatur (15) und die zweite Temperatur (16) über ein Wärmeleitmodell rechnerisch ermittelt werden.

6. Verbrennungskraftmaschine (2) mit einer Mehrzahl von Brennkammern (7) und einer Einspritzvorrichtung (1) sowie zusätzlich mit einer Einrichtung (19) zur Lambdaregelung der Verbrennungskraftmaschine (2); wobei die Einspritzvorrichtung (1) ein Volumen (3) aufweist mit mindestens einem Einlass (4), über den das Volumen (3) mit einer Druckleitung (5) fluidtechnisch verbindbar ist, und mehrere Auslässe (6), über den das Volumen (3) mit der Mehrzahl von Brennkammern (7) der Verbrennungskraftmaschine (2) verbindbar ist; wobei die Einspritzvorrichtung (1) weiter einen ersten Drucksensor (8) zur Messung eines Drucks (9, 10) in dem Volumen (3) sowie eine Steuervorrichtung (20) aufweist; wobei die Steuervorrichtung (20) zur Durchführung des Verfahrens nach einem der vorhergehenden Patentansprüche eingerichtet ist; wobei über die Einspritzvorrichtung (1) den Brennkammern (7) ein Kraftstoff zuführbar ist.

## Claims

1. A method for diagnosing an injection device (1) for a combustion engine (2), wherein the injection device (1) has a volume (3) with at least one inlet (4), via which the volume (3) can be fluidically connected to a pressure line (5), and a plurality of outlets (6), via which the volume (3) can be connected to a plurality of combustion chambers (7) of the combustion engine (2); wherein the injection device (1) further comprises a first pressure sensor (8) for measuring a pressure (9, 10) in the volume (3); wherein the combustion engine comprises the plurality of combustion chambers (7), the injection device (1), and a device for the lambda control of the combustion engine, wherein a fuel can be supplied to the combustion chambers (7) via the injection device (1); wherein the method comprises at least the following steps:
a) determining a first state (11) of the injection device (1) in which the at least one inlet (4) and the outlets (6) are closed and the volume (3) has a constant volume (3); wherein the volume (3) is completely filled by a liquid (12) provided for injection;
b) measuring a first pressure (9) at a first point in time (13);
c) measuring a second pressure (10) at a later second point in time (14);
d) evaluating a pressure change from the first pressure (9) to the second pressure (10);
wherein, by the evaluation according to step d), a total leakage of the injection device (1) is ascertained; wherein starting from the total leakage, a leakage via the outlets (6) is ascertained via an evaluation of the lambda control of the combustion engine (2); wherein, via the lambda control, that is, by measuring the content of air in the exhaust gas, it is determined whether the liquid (12) has arrived in the combustion chambers (7) via the outlets (6); wherein the lambda control is performed for each combustion chamber (7) so that the outlet (6) through which leakage occurs is determined by the method.

2. The method according to Claim 1, wherein the method comprises the following additional steps:
i. ascertaining a first temperature (15) of the liquid (12) in the volume (3) at the first point in time (13);
ii. ascertaining a second temperature (16) of the liquid (12) in the volume (3) at the second point in time (14);
iii. evaluating a pressure change from the first pressure (9) to the second pressure (10) taking into account the first temperature (15) and the second temperature (16); wherein step iii. takes place as a special embodiment of step d).

3. The method according to Claim 2, wherein a characteristic curve (17) representing the pressure change as a function of the temperature (15, 16) of the liquid (12) is ascertained in a leak-free injection device (1); wherein the characteristic curve (17) is taken into account for step iii.

4. The method according to one of the preceding Claims 2 or 3, wherein the first temperature (15) and the second temperature (16) are measured via a temperature sensor (18).

5. The method according to one of the preceding Claims 2 or 3, wherein the first temperature (15) and the second temperature (16) are ascertained computationally via a heat conduction model.

6. A combustion engine (2) having a plurality of combustion chambers (7) and an injection device (1), and also having a device (19) for lambda control of the combustion engine (2); wherein the injection device (1) has a volume (3) with at least one inlet (4), via which the volume (3) can be fluidically connected to a pressure line (5), and a plurality of outlets (6), via which the volume (3) can be connected to the plurality of combustion chambers (7) of the combustion engine (2); wherein the injection device (1) further comprises a first pressure sensor (8) for measuring a pressure (9, 10) in the volume (3) and a control device (20); wherein the control device (20) is configured to carry out the method according to one of the preceding claims; wherein a fuel can be supplied to the combustion chambers (7) via the injection device (1).

## Revendications

1. Procédé de diagnostic d'un dispositif d'injection (1) pour un moteur à combustion interne (2), dans lequel le dispositif d'injection (1) présente un volume (3) comprenant au moins une entrée (4), à travers laquelle le volume (3) peut être connecté de manière fluidique à une conduite sous pression (5) et plusieurs sorties (6), à travers lesquelles le volume (3) peut être connecté à une pluralité de chambres de combustion (7) du moteur à combustion interne (2) ; dans lequel le dispositif d'injection (1) présente en outre un premier capteur de pression (8) pour la mesure d'une pression (9, 10) dans le volume (3) ; dans lequel le moteur à combustion interne présente la pluralité de chambres de combustion (7), le dispositif d'injection (1) et un dispositif de régulation Lambda du moteur à combustion interne, dans lequel un combustible peut être amené à travers le dispositif d'injection (1) dans les chambres de combustion (7) ; dans lequel le procédé présente au moins les étapes suivantes :
a) détermination d'un premier état (11) du dispositif d'injection (1), dans lequel l'au moins une entrée (4) et les sorties (6) sont fermées et le volume (3) présente un volume (3) constant ; dans lequel le volume (3) est entièrement rempli par un liquide prévu pour injection (12) ;
b) mesure d'une première pression (9) à un premier moment (13) ;
c) mesure d'une deuxième pression (10) à un deuxième moment (14) ultérieur ;
d) évaluation d'un changement de pression de la première pression (9) à la deuxième pression (10)
une fuite totale du dispositif d'injection (1) étant déterminée au moyen de l'évaluation selon l'étape d) ; dans lequel une fuite au niveau des sorties (6) est déterminée à partir de la fuite totale à travers une évaluation de la régulation Lambda du moteur à combustion interne (2) ; dans lequel il est déterminé à travers la régulation Lambda, donc à travers la mesure de la teneur d'air dans les gaz d'échappement, si le liquide (12) est entré dans les chambres de combustion (7) à travers les sorties (6) ; dans lequel la régulation Lambda est effectuée pour chaque chambre de combustion (7), de sorte à déterminer au moyen du procédé à travers quelle sortie (6) se produit une fuite.

2. Procédé selon la revendication 1, dans lequel le procédé comprend les étapes supplémentaires suivantes :
i. détermination d'une première température (15) du liquide (12) dans le volume (3) au premier moment (13) :
ii. détermination d'une deuxième température (16) du liquide (12) dans le volume (3) au deuxième moment (14) :
iii. évaluation d'un changement de pression de la première pression (9) à la deuxième pression (10) en tenant compte de la première température (15) et de la deuxième température (16) ; dans lequel l'étape iii. est effectuée comme une conception spéciale de l'étape d).

3. Procédé selon la revendication 2, dans lequel une courbe caractéristique (17), qui représente le changement de pression en fonction de la température (15, 16) du liquide (12), est déterminée dans un dispositif d'injection (1) exempt de fuites ; dans lequel la courbe caractéristique (17) est prise en compte pour l'étape iii.

4. Procédé selon l'une quelconque des revendications 2 ou 3 précédentes, dans lequel la première température (15) et la deuxième température (16) sont mesurées au moyen d'un capteur de température (18).

5. Procédé selon l'une quelconque des revendications 2 ou 3 précédentes, dans lequel la première température (15) et la deuxième température (16) sont calculées au moyen d'un modèle de conduction thermique.

6. Moteur à combustion interne (2) comprenant une pluralité de chambres de combustion (7) et un dispositif d'injection (1) ainsi que comprenant en outre un dispositif (19) de régulation Lambda du moteur à combustion interne (2) ; dans lequel le dispositif d'injection (1) présente un volume (3) comprenant au moins une entrée (4), à travers laquelle le volume (3) peut être connecté de manière fluidique à une conduite sous pression (5) et plusieurs sorties (6), à travers lesquelles le volume (3) peut être connecté à la pluralité de chambres de combustion (7) du moteur à combustion interne (2) ; dans lequel le dispositif d'injection (1) présente en outre un premier capteur de pression (8) pour la mesure d'une pression (9, 10) dans le volume (3) ainsi qu'un dispositif de commande (20) ; dans lequel le dispositif de commande (20) est conçu pour l'exécution du procédé selon l'une quelconque des revendications précédentes ; dans lequel un combustible peut être amené à travers le dispositif d'injection (1) dans les chambres de combustion (7).
